# EUROPEAN PATENT SPECIFICATION

(11) **EP 2 225 752 B1**
(45) Date of publication and mention of the grant of the patent: **23.03.2016**
(21) Application number: 08856301.0
(22) Date of filing: 01.12.2008
(51) Int. Cl.: G09G 5/36, G09G 5/395, G09G 5/397, G06T 1/20

(54) **VIDEO RENDERING ACROSS A HIGH SPEED PERIPHERAL INTERCONNECT BUS**
VIDEOWIEDERGABE ÜBER EINEN SCHNELLEN PERIPHERIEVERBINDUNGSBUS
RENDU VIDÉO PAR L'INTERMÉDIAIRE D'UN BUS D'INTERCONNEXION PÉRIPHÉRIQUE À GRANDE VITESSE

(30) Priority: 30.11.2007 US 987559
(43) Date of publication of application: 08.09.2010
(73) Proprietor: ATI Technologies ULC, Markham, ON L3T 7X6 (CA); ATI International SRL, Christ Church (BB)
(72) Inventor: CHENG, Jeffrey, Toronto ON M2K 2A4 (CA); LAVIOLETTE, Terry, Courtice ON L1E 2C3 (CA); HUANG, James, North York ON M2N 4M7 (CA); ZABRZYCKI, Robert, Mississauga ON L5H 4A1 (CA); LONG, Jason, Richmond Hill ON L4S 2J5 (CA); WENG, Xiangquan, Toronto ON M4A 2J9 (CA); MARINKOVIC, Sasa, Toronto ON M6B 4B5 (CA); MUMMAH, Phil, Redwood City CA 94063 (US); CHIEN, Mingwei, Toronto ON M2J 5G5 (CA); TRESIDDER, Michael, Newmarket ON L3X 1L6 (CA); SALTCHEV, Roumen, Markham ON L3R 4C4 (CA); XIE, George, North York ON M2J 1G3 (CA); LITCHMANOV, Iouri, Richmond Hill, ON L4C 5N2 (CA)
(74) Representative: Robinson, David Edward Ashdown
(86) International application number: PCT/US2008/085160
(87) International publication number: WO 2009/073617

(56) References cited:
- US-A- 5 896 141
- US-A1- 2005 237 327
- US-A1- 2005 285 863
- US-A1- 2006 267 987
- US-A1- 2007 283 175

## Description

### FIELD OF THE INVENTION

The present invention relates generally to computing devices, and more particularly to a computing device including graphics processors interconnected by a high speed peripheral bus.

### BACKGROUND OF THE INVENTION

In recent years, computer hardware has become increasingly integrated. Computer peripherals are often formed as part of an integrated chipset that cooperates with a central processor. Often, computer audio, graphics adapters and interfaces form part of the integrated chipsets. Such integration reduces costs and size of the computing devices.

At the same time, graphics processors are steadily evolving to provide enhanced performance and features. Leading graphics processors are nearly as complex as central processors. Thus, despite trends in integration, high performance graphics processors are still typically formed on peripheral cards. Integrated graphics processors, are by comparison, relatively simple and do not provide the features or performance of the high performance, graphics processors formed on peripheral cards. In the presence of an add-on peripheral card, integrated graphics components when present, are typically redundant and therefore disabled.

Similarly, as graphics adapters, whether integrated or external, are upgraded there is often no role for less powerful adapters, and these are disposed of or disabled.

United States patent application publication no. 2006/0267987 discloses a master/slave graphics adapter arrangement according to which a computing device includes first and second graphics adapters. A graphics processor of the first graphics adapter acts as a master graphics processor, while the second graphics adapter acts as a slave. The master graphics processor renders graphics to be displayed on multiple separate displays within frame buffer memory of the first graphics adapter. Images to be displayed on one of the separate displays are transferred from frame buffer memory of the first graphics adapter to frame buffer memory of the second graphics adapter. Other documents in this technical field are US 2005/285863 and US 5 896 141.

Accordingly, there remains a need to reduce component redundancy.

### SUMMARY OF THE INVENTION

In accordance with an aspect of the present invention, graphics generated by one graphics processor are transferred across a high speed expansion/interconnect bus to a frame buffer. The rendered frames from the frame buffer are presented on a display by way of a display interface in communication with the frame buffer.

Conveniently, the display interface of another existing (e.g. integrated) graphics adapter/subsystem may be used to present the rendered frames on an interconnected display.

In this way the graphics processor may form part of a graphics adapter that need not include a display interface or possibly even a frame buffer. Likewise, the graphics processor may be replaced with a more current graphics processor.

The graphics processor may form part of a graphics adapter contained on a peripheral expansion card.

In accordance with a first aspect there is provided a method of operating a computing device according to claim 1.

In accordance with another aspect of the present invention, there is provided a graphics subsystem for connection to a host computing device according to claim 6.

A third aspect of the present invention provides a computing device comprising the graphics subsystem and the host device according to claim 8.

### BRIEF DESCRIPTION OF THE DRAWINGS

In the figures,
FIG. 1 is a simplified block diagram of a computing device, exemplary of an embodiment of the present invention;
FIG. 2 is a simplified logical block diagram of software at the computing device of FIG. 1;
FIG. 3 is a simplified block diagram of a portion of the computing device of FIG. 1;
FIG. 4 is a further schematic block diagram of a portion of the computing device of FIG. 1
**FIG. 5A** is a flow chart illustrating steps performed at the computing device of **FIG. 1**,
**FIG. 5B** schematically depicts the effects of steps of **FIG. 5A** on components of the device of **FIG. 1**;
**FIG. 6A** is a flow chart illustrating steps performed at the computing device of **FIG. 1**
**FIG. 6B** schematically depicts the effects of steps of **FIG. 6A** on components of the device of **FIG. 1**;
**FIGS. 7** and **8** are flow charts illustrating steps performed at the computing device of **FIG. 1**
**FIG. 9** is a further partial simplified schematic block diagram of portions of a computing device,
**FIG. 10**, is a flow chart detailing steps performed by software at the device of **FIG. 9**, and
**FIG. 11A**, **11B** are simplified block diagrams illustrating operation of the device of **FIG. 9**; and
**FIG. 12** is a further partial simplified schematic block diagram of portions of a computing device,

### DETAILED DESCRIPTION

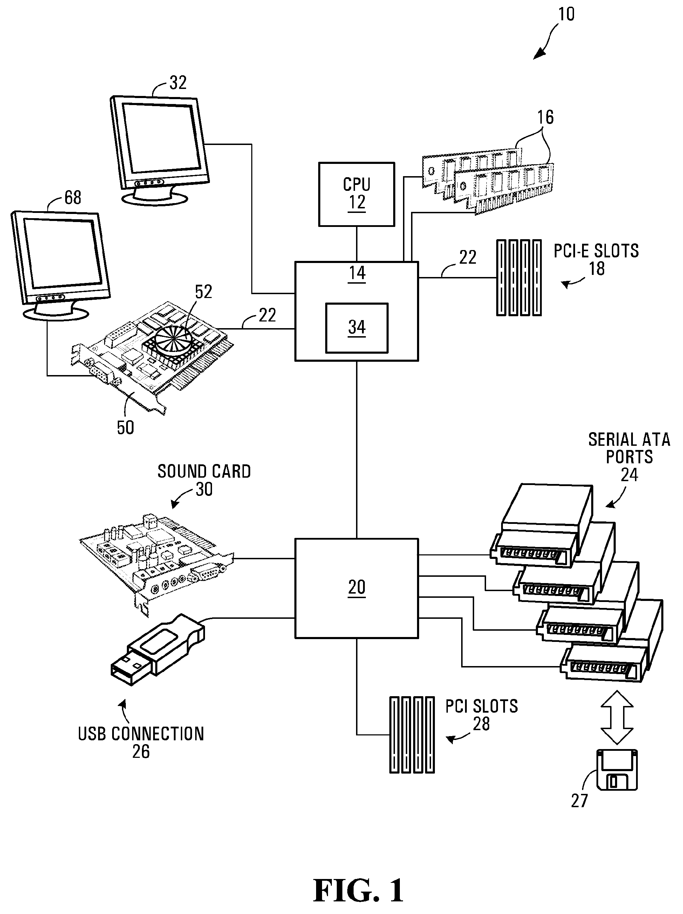

FIG. **1** is a simplified schematic block diagram of a computing device exemplary of an embodiment of the present invention. Computing device **10** is based on a conventional Intel x**86** architecture. However, as will become apparent, the invention may easily be embodied in computing devices having a PowerPC, AMD x**86** or other architecture.

Computing device **10** includes a processor **12**, interconnected to system memory **16** and peripherals through integrated interface circuits **14** and **20**.

Processor **12** in exemplary computing device **10** is a conventional central processing unit and may for example be a microprocessor compatible with the INTEL.TM. x**86** family of microprocessors.

Integrated interface circuits **14** and **20** are often referred to as a north bridge and south bridge, respectively, and provide an interface for processor **12** to peripherals and memory. As illustrated, north bridge **14** interconnects the processor **12**; memory **16**; a plurality of expansion slots **18** by way of a high speed interconnect bus **22**; and south bridge **20**. South bridge **20** in turn, interconnects lower speed peripherals and interconnects, such as disk drives by way of integrated IDE/SATA ports **24**, universal serial bus devices by way of integrated universal serial bus (USB) ports **26**; and other peripherals by way of a lower speed interconnect bus **28**, compliant for example, with known PCI or ISA standards. South bridge **20** may further include integrated audio components **30**, networking interfaces (not shown) and the like.

An exemplary interconnect bus **22** is the PCI express (PCIe) bus, that has a bandwidth in the gigabyte per second range, and allows data transfer reads and writes at this bandwidth. For example, current PCle bus speeds allow bi-directional data transfer at speeds of up to **266** MHz or **533** MHz, allowing data rates of up to **2.1** G bytes per second or **4.2** G bytes per second.

In the depicted embodiment north bridge **14** further includes an integrated graphics adapter **34** suitable for interconnecting computing device **10** to a first display **32** in the form of a monitor, LCD panel, television or the like.

As detailed below, an additional graphics adapter **52** interconnected by way of interconnect bus **22**, forming for example, part of peripheral expansion card **50** within expansion slots **18** on interconnect bus **22** may further be part of computing device **10**.

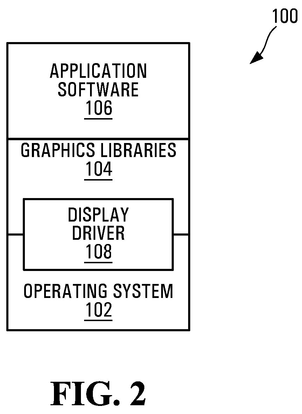

In the depicted embodiment, computing device **10** executes software stored within memory **16**. As illustrated in FIG. **2**, exemplary software **100** includes an operation system **102**, graphics libraries **104** and application software **106**, stored within memory **16**. Exemplary operating systems include Windows Vista, Windows XP; Windows NT **4.0**, Windows ME; Windows **98**, Windows **2000**, Windows **95**, or Linux operating systems. Exemplary graphics libraries include the Microsoft DirectX libraries and the OpenGL libraries. Computer memory **16** (FIG. **1**) and interconnected disk drives (not shown) include a suitable combination of random access memory, read-only memory and disk storage memory, used by device **10** to store and execute operating system and graphics adapter driver programs adapting device **10** in manners exemplary of the embodiments of the present invention. Exemplary software **100** (FIG. **2**) could, for example, be stored in read-only memory or loaded from an external peripheral such as a disk drive in communication with IDE/SATA ports **24**. Computer readable medium **27** may be an optical storage medium, a magnetic diskette, tape, ROM cartridge or the like.

Graphics libraries **104** or operating system **102** further include a graphics driver software **108**, used for low-level communication with graphics adapters **34** and **52**. The software is layered, with higher level layers using lower layers to provide certain functionality. Applications may make use of the operating system **102** and graphics libraries **104** to render **2**D or **3**D graphics. Render, in this context, includes drawing, or otherwise creating a graphic image for presentation, and may for example include polygon rendering, ray-tracing, image decoding, line drawing or the like. As will become, apparent, software exemplary of embodiments of the present invention may form part of graphics libraries **104** and/or driver software **108**. In the exemplified embodiment, exemplary software may form part of the OpenGL library and associated drivers. OpenGL is more particularly detailed in The Official Guide to Learning OpenGL, Version **1.1**, the contents of which are hereby incorporated by reference. A person of ordinary skill will, however, appreciate that methods exemplary of embodiments of the present invention may form part of Microsoft Direct**3**D libraries, applications (such as games) that do not use custom libraries or routine, or any other **3**D application or library.

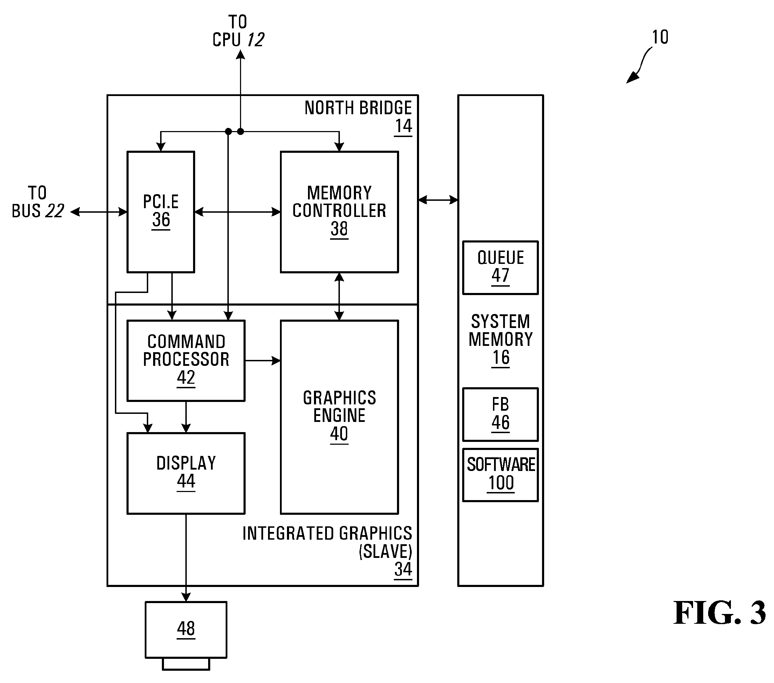

A further simplified block diagram of portions of exemplary computing device **10** (and particularly north bridge **14**) depicting integrated graphics adapter **34** is illustrated in FIG. **3**. As illustrated, north bridge **14** includes a high speed bus interface **36**, and memory controller **38**, interconnecting bridge **14** to interconnect bus **22** and system memory **16**. North bridge **14** further includes integrated graphics adapter **34**, that in turn includes a graphics processor **40**, a command processor **42** and a display interface **44**.

Graphics processor **40** may take the form of a three dimensional (3D) graphics processor capable of rendering three dimensional images within a frame buffer **46** allocated within system memory **16**, and may include multiple pipelines and pipeline stages for accelerated rendering of graphics.

In normal, single monitor operation, commands are passed to graphics processor **40** by command processor **42**, in a conventional manner. For example, command processor **42** may include registers used to define a command queue **47** in memory **16**. Application software **106** or operating system **102** uses libraries **104** to render graphics images. Driver software **108** generates graphics processor specific commands, and places these in the command queue **47**, while also updating registers of command processor **42** to reflect the end of the queue. Graphics processor **42** processes queued commands asynchronously, in a pipelined manner in order to, among other things, render images within frame buffer **46**. As graphics processor **40** is able to process the next command in the queue, it provides a signal to command processor **42**, which in turn fetches the next command in the queue **47** and advances the queue pointer in registers of command processor **42**.

Display interface **44**, by way of memory controller **38** samples the frame buffer **46** and presents an image on one or more video output ports **48** in the form of VGA ports; composite video ports; DVI ports; HDMI; DisplayPort, or the like, for display of one or more video images on video devices such as display **32** (FIG. **1**), in the form of a television, monitor or the like. In this way, images rendered by graphics processor **40** in frame buffer **46** may be presented.

As will be appreciated display interface **44** may be any suitable interface for converting data within buffer for display on a display device. For example, display interface **44** may take the form of a RAMDAC. Display interface **44** is typically programmable, for example through a plurality of registers, allowing driver software **108** or similar software or graphics processor **40** to set the beginning address within memory **16** to present at its display output. As well, interface **44** pixel depth (i.e. bits per pixel) and screen resolution are typically programmable.

As will be appreciated, instead of allocating a single frame buffer **46** within memory **16**, two frame buffers may be allocated. The buffers may be used alternatively to more smoothly present rendered graphics. Display interface **44** only displays contents of one of the two buffers at any time. The buffer being displayed is typically referred to as the front buffer. Graphics processor **40** renders images for display to the so-called back buffer the frame buffer that is currently not being displayed by display interface **44**. At the completion of rendering a frame, front and back buffers are flipped: display interface **44** is programmed to present the former back buffer. In this way, transition between sequential frames rendered by graphics processor **40** may appear smooth.

Notably, registers and frame buffer memory **46** used by adapter **34** are all mapped to addresses within global memory space.

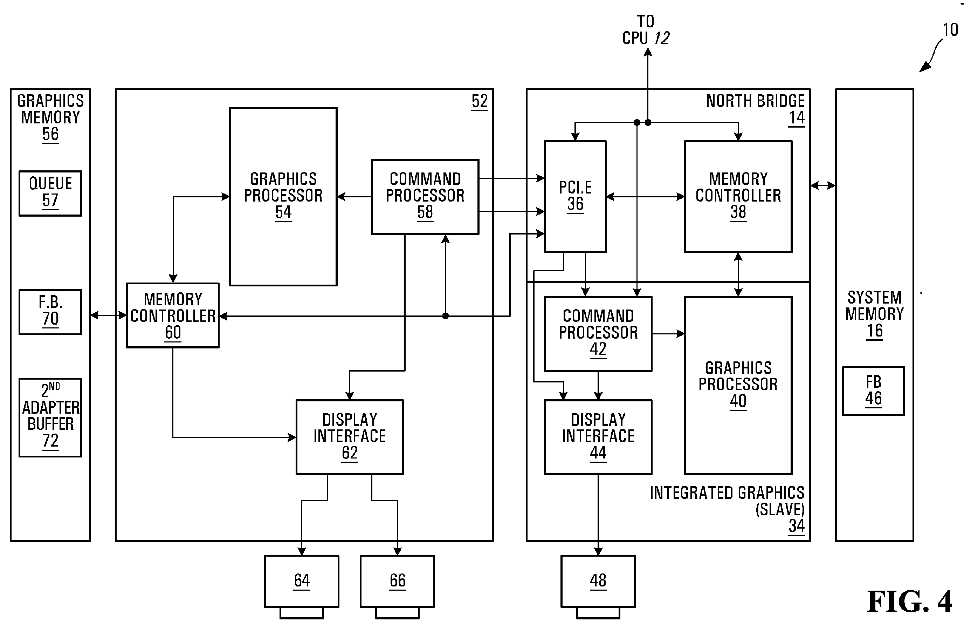

Exemplary of the present invention, however, computing device **10** further includes a graphics adapter **52** formed on a peripheral expansion card **50** that may be inserted into device **10** by way of an expansion slot on high speed interconnect bus **22**, in communication with north bridge **14**, as illustrated in FIG. **1**. Graphics adapter **52**, as interconnected to north bridge **14**, is schematically illustrated in FIG. **4**. As illustrated, graphics adapter **52** includes a graphics processor **54**, video memory **56**, a command processor **58** a memory controller **60**, and a display interface **62**. One or more ports **64**, **66** allow interconnection of adapter **52** to one or more display devices, like display **68** (FIG. **1**).

Command processor **58**, and display interface **62** function in much the same way as command processor **42** and display interface **44**, respectively. Graphics processor **54** operates in much the same way as graphics processor **40**, in its normal mode of operation. Graphics adapter **52** includes its own memory **56**, and a memory controller **60** to provide access to memory **56** and system memory **16**. Local memory **56** is used to hold, among other things, one or more buffer(s) **70** for graphics adapter **52** used by graphics processor **54**, that may act as frame buffer(s). A command queue **57** for graphics processor **54** is also established in system memory **16**.

Again, local memory **56** is addressable at addresses within global system memory space, through memory controller **60**. As well, registers used by command processor **54** and display interface **62** are addressable at addresses within global address space. As already noted, registers and frame buffer **46** used by adapter **34** are mapped to global memory space. Thus, command processor **58** and graphics processor **54** may write to frame buffer **46** and registers used by display interface **44** and command processor **42**.

Additionally, graphics processor **54**, in conjunction with memory controller **60** is operable to perform block transfer operations to transfer data from and to system and adapter memory **16**, **56** at memory addresses.

In an effort to provide economical integrated components, integrated graphics adapter **34** provides limited functionality. For example, resolution, **3**D graphics abilities, and the like of integrated graphics controller are relatively limited. Thus, integrated graphics adapter **34** typically has significantly less graphics processing ability than graphics adapter **52**. For example, adapter **34** may operate more slowly than adapter **52**, provide less features, and the like.

Now, integrated adapter **34** or adapter **52** may, or may not, by itself allow the interconnection of multiple physical display devices, by way of multiple ports like port **48**. Each adapter, however, may be interconnected with at least one physical display. So, exemplary of embodiments of the present invention, adapter driver software **108** loaded within memory **16** causes graphics adapter **52** to act as a master (or first) graphics adapter rendering graphics for presentation at both displays **32** and **68**, and graphics adapter **34**, as a second or slave adapter.

As will become apparent, in this master/slave mode of operation, integrated graphics adapter **34** is substantially disabled. However, components of on-board graphics adapter **34** (and in particular display interface **44**) may still be used to drive interconnected monitors and other display devices. As such, card **50** need not include multiple display ports and display drivers. Instead, display interface **44** and its port(s) **48** may be used to drive at least one monitor or display **32**, in addition to the display **68** or displays driven by card **50**. If adapter **52** includes multiple ports (such as ports **64**, **66**), processor **52** may additionally render images for presentation through these multiple ports. Of course, driver software **108** may also allow operation of adapter **34** in its conventional mode of operation, described above. Selection of the mode of operation of adapter **34** (and hence adapter **52**) may be made by or through application software **106.**

Specifically, in the master/slave mode of operation, exemplary of embodiments of the present invention, driver software **108** within memory **16** allocates an active frame buffer **70** and a secondary adapter buffer **72** within memory **56** of adapter **52**, as schematically depicted in FIG. **4**. The active frame buffer **70** functions as a conventional frame buffer for adapter **52**, and thus stores frames for display on display **68** of adapter **52**. As such, graphics processor **54** renders **2**-D or **3**-D graphics in the active frame buffer **70** within memory **56** in a conventional manner. Display interface **62** of card **50** converts contents of the active frame buffer **70** for display on an interconnected monitor or display device. Optionally, active frame buffer **70** may be replaced by front and rear buffers, as described above.

Graphics processor **54** further renders images for display on a display device **32** within secondary adapter frame buffer **72**. At the conclusion of rendering a frame within secondary adapter frame buffer **72**, the contents of secondary adapter frame buffer **72** are transferred to frame buffer **46** for presentation by display interface **44** of graphics adapter **34**, as detailed below.

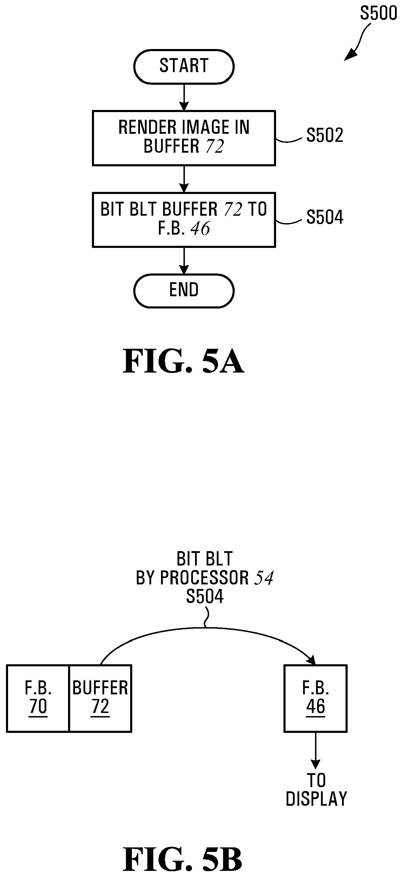

In a first embodiment, graphics adapter driver software **108** within memory **16** performs steps S**500** depicted in FIG. 5A. Specifically, driver software **108** generates commands directing graphics processor **54** to render the secondary adapter buffer **72** of memory **56**, in steps S**502**. These commands are placed in the command queue **57** of adapter **52** and executed by graphics processor **54**, in much the same way as commands would be queued in queue **47**, as described above. Once the frame is rendered, driver software **108** further generates a command (or commands) causing processor **54** to bit block transfer (BITBLT) the contents of secondary adapter frame buffer **72** within memory **56** in step S**504**, to that area of memory **16** allocated as frame buffer **46** for graphics adapter **34**.

Display interface **44** of graphics adapter **34**, in turn, has been preprogrammed to display the contents of its frame buffer **46** to an interconnected monitor or display at port **48**. Conveniently then, images displayed on displays **32** and **68** interconnected with ports **48** and port **64** are rendered or drawn by graphics processor **54**. The effects of step S**504** on buffer **72** and frame buffer **46** is illustrated in FIG. **5**B.

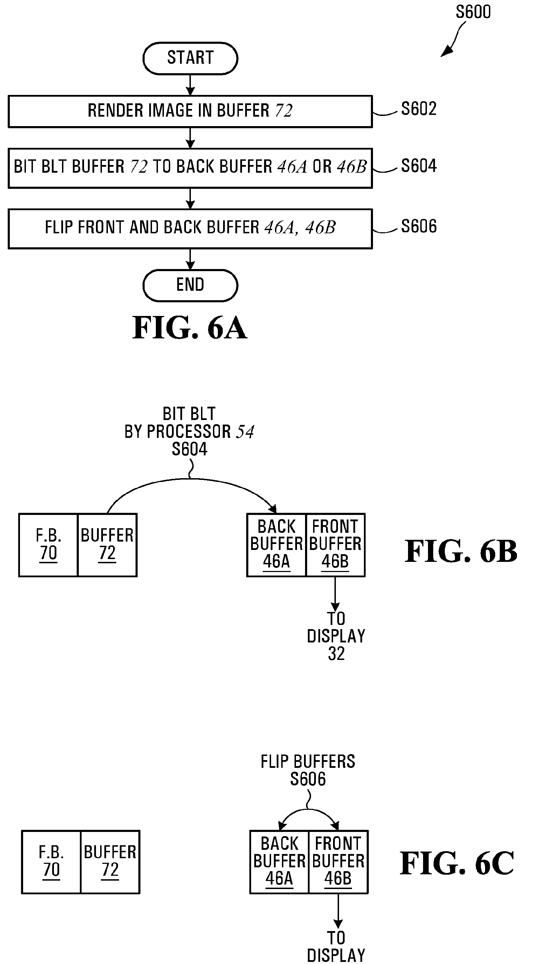

In a second embodiment, steps S**600** depicted in FIG. **6**A are performed. Initially, front and back frame buffers are allocated within memory **16** of adapter **52**. For convenience these are designated as buffers **46**a and **46**b, and depicted in FIG. **6**B. Processor **54** again renders any frame to presented by display interface **44** within secondary adapter frame buffer **72** of memory **56** as described above with reference to step S**502**, in step S**602**.

At the conclusion of rendering a frame for display on device **32**, driver software **108** programs graphics processor **54** to bit block transfer (BITBLT) the contents of secondary adapter frame buffer **72** within memory **56**, to the then current back buffer within memory **16** for graphics adapter **34** in step S**604**. Upon completion of the BITBLT, driver programs processor **54** to program registers of display interface **44** to flip the back buffer and front buffer of adapter **34** (i.e. use the back buffer as the front buffer), in step S**606**. This may be done by directly reprogramming the register of display interface **44** identifying the start address used by display interface **44** for presentation of data. Display interface **44** of graphics adapter **34**, in turn, presents the contents of it's the buffer to an interconnected monitor (i.e. display **68**) at port **48**. The previous front buffer, in turn, is now used as back buffer for adapter **34**, and the next frame rendered by processor **54** for display on display **32** will initially be transferred to this back buffer in step S**604**. Driver software **108**, of course, maintains the start location and status of each buffers **46**a and **46**b as front and back buffers. The effect of steps S**604** and S**606** on buffers **46**a and **46**b is schematically illustrated in FIG. **6**B.

Without synchronization, use of a single buffer **46** or direct programming of display interface **44** of adapter **34** may cause visible tearing. That is, any time outside of the vertical blanking interval that registers of display interface **44** are reprogrammed, tearing may be visible, as display parameters are changed in the middle of the frame output by interface **44**.

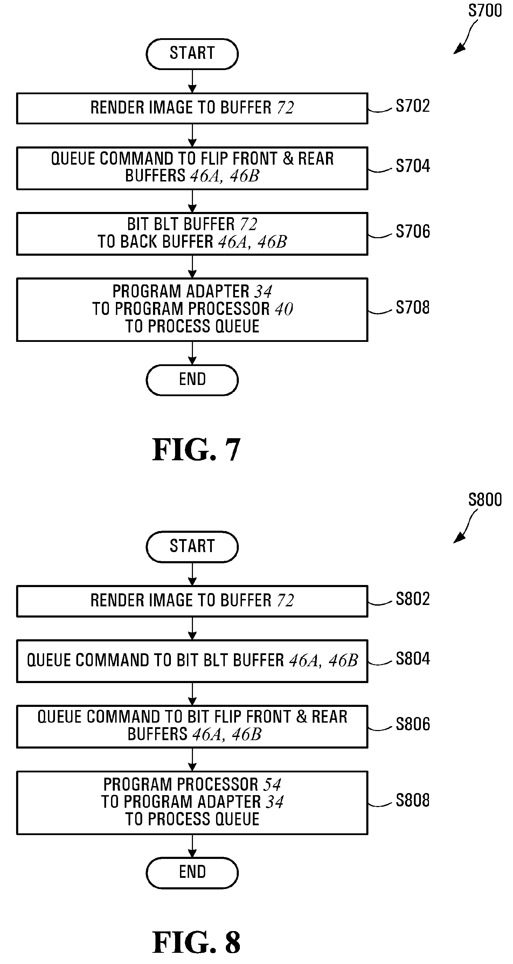

Thus, in yet a third embodiment, steps S**700** depicted in FIG. **7** may be performed. Again, front and rear buffers **46**a, **46**b are initially allocated within memory **16** used by adapter **34**. Processor **54** again renders images for display at device **32** within buffer **72** of local memory **56**, as described above with reference to steps S**502** and S**602**.

At the completion of rendering a frame for display on display **32**, driver software **108** within memory **16** programs graphics processor **54** to bit block transfer (BITBLT) the contents of secondary adapter frame buffer **72** within memory **56**, to the then current back buffer within memory **16** of graphics adapter **34** in step S**704**. Driver software **108** further places a command in the command queue **47** of adapter **34** to flip front and back buffers, in step S**706**. However, registers of command processor **42** are not updated by driver software **108** to reflect the pending command in command queue **47**. Instead, driver software **108** provides a command to graphics processor **54** in step S**708** to update command queue registers of command processor **42** upon completion of the bit block transfer initiated in step S**706**. This, in turn causes command processor **42** to provide instructions to processor **40** to flip its back to front buffer. Graphics processor **40**, in turn executes the queued command to flip back and front buffers of adapter **34** (i.e. by reprogramming registers of display interface **44** to present the contents of its previous back buffer to an interconnected monitor or display at port **48**).

In yet a fourth embodiment, steps S**800** depicted in FIG. **8** are performed. Again, front and back buffers are initially allocated within memory **16** of adapter **34**. Processor **54** again renders images for display **32** within buffer **72** of local memory **56**, as described above.

Driver software **108** further places a command in queue **47** of adapter **34** to cause graphics processor **40** to bit block transfer (BITBLT) the contents of the secondary frame buffer **72** within memory **56**, to that area of system memory **16** allocated as the current back frame buffer for graphics adapter **34**. Driver software **108** also places a command in queue **47** to cause graphics processor **40** to flip front and back buffers of adapter **34** by programming display interface **44** to use the rear buffer as front buffer. However, registers of command processor **42** defining the queue pointer are not updated until a frame has been rendered in buffer **72**.

So, at the conclusion of rendering a frame for display **32**, graphics processor **54** provides a command to update command registers defining the queue pointer for command processor **42** to reflect the two pending commands within the command queue of adapter **34**. Graphics processor **40**, in turn executes the queued commands to bit block transfer the contents of buffer **72** to its back buffer and flip its back and front buffers (i.e. by reprogramming registers of display interface **44** to present the contents of its previous back buffer to an interconnected monitor or display at port **48**).

As will now be appreciated, the above described embodiments allow a master graphics processor to assume responsibility for drawing two or three dimensional graphics images on multiple independent frame buffers. A slave graphics adapter may be used to display images created in one frame buffer. Device electronics and ports required to drive additional displays may be provided by slave graphics adapter **34**. In this way, electronics included in the slave graphics controller may be effectively utilized to allow driving of multiple displays.

Conveniently, buffers **70** and **72** may be used to define a single surface on which application software **106** may render single graphic images to be displayed across two or more displays **48** and **64**, interconnected with graphics adapters **52** and **34**. Driver software **108** may accordingly report an available screen size to application software **106**, equal to the size of buffer **70** and buffer **72**. Thus, if buffer **70** has a resolution of m.sub.**1**xn and buffer **72** has a resolution of m.sub.**2**xn, driver software **108** may report an available screen size of (m.sub.**1**+m.sub.**2**)xn to an application of application software **106**. Rendering by driver software **108** is simplified if buffers **70** and **72** occupy adjacent (m.sub.**1**+m.sub.**2**)xn pixel locations within memory **56**. Application software **106** may, in turn use driver software **108** to cause graphics processor **40** to render larger images having a resolution of (m.sub.**1**+m.sub.**2**)xn pixels making up the surface defined by buffers **70** and **72**. Buffers **70** and **72** thus store image pairs, with each image of the pair forming a portion of the larger image rendered by the application. At the conclusion of rendering each larger image, driver software **108** may transfer the image in buffer **72** to frame buffer **46**, for display on display **32**, in accordance with steps S**500**, S**600**, S**700** or S**800** described above. The image in buffer **70** may be displayed on display **68** in normal fashion. An end user viewing displays **32** and **68** side by side recognizes the larger image rendered by application **106**. As will be appreciated, application **106** in the form of a game may take advantage of multiple displays, without requiring modification.

If front and back buffers are used for display **68**, two different buffers may be allocated and used in place of buffer **72**, to ensure that the buffer holding the surface portion to be displayed on display **32** is adjacent in memory **56** to the buffer in which the surface portion to be displayed on display **68** is being rendered. Steps S**602**, S**604**, S**702**, S**704**, or steps S**802**, S**704** could accordingly be modified to bit block transfer the buffer holding the just completed image to the back buffer **46**a or **46**b. Conveniently, existing application software **106** need not be modified. Instead, the application software may simply rely on the reported larger screen size. Driver software **108** causes the rendering of surfaces across multiple displays.

As will now also be appreciated, although the depicted embodiment utilizes an integrated graphics controller as a slave graphics adapter, the slave graphics adapter could easily be another graphics adapter in communication with graphics adapter **52** by way of a bus having sufficient bandwidth to allow transfer of graphics frames into the slave frame buffer(s). As such, the slave graphics processor could be formed as another PCle compliant expansion card. So, for example, as graphics cards are upgraded, older expansion cards may still be used for their ability to drive interconnected displays. Similarly, the interconnect bus need not be a PCle interconnect bus, but could be any other suitable bus having a bandwidth allowing transfer of data between frame buffers at a rate equal to the refresh rate used by display interface **44**. Likewise, although frame buffers **46** (and front and back buffers **46**a and **46**b) have been described as being formed in system memory **16**, they could easily be formed as part of memory local to adapter **34**.

In yet another alternate embodiment rendering across bus **22**, may allow a graphics adapter (or subsystem) interconnected by high speed bus **22** to take the place of an integrated adapter/subsystem.

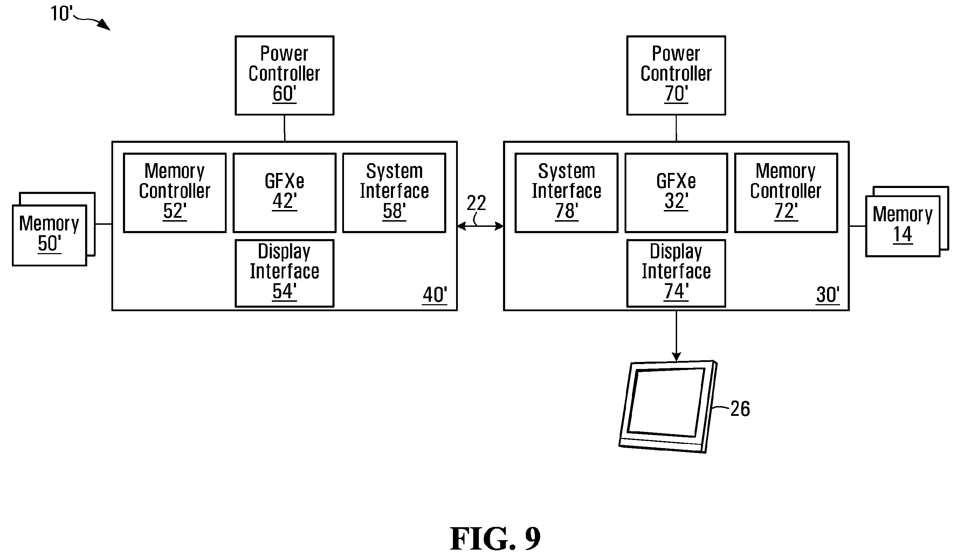

To this end, **FIG. 9** is a simplified block diagrams exemplary of a portion of a computing device **10'** exemplary of another embodiment. Computing device **10'** is detailed in US Patent Application No. 11/421,005.

Briefly, however, device **10'** includes two graphics subsystem **30'** and **40'**. Graphics subsystem **30'** includes a graphics engine/processor **32'**, a memory controller **72'**, a display interface **74'** and a bus interface **78'**. A second graphics subsystem **40'** is in communication with graphics subsystem **30'**, by way of high speed bus **22'**, **such as the PCle bus**. Graphics subsystem **40'** includes its own graphics engine/processor **42'**; memory controller **52'**; display interface **54'**. Graphics subsystem **40'** is further in communication with graphics memory **50'**. As will become apparent, subsystem **40'** is adapted to render graphics to memory **14'**, across bus **22'**.

Device **10'** may conveniently be formed as a portable computing device in the form of a laptop or smaller computing device. As such, a single housing may contain a DC power source, display **26'** and the above mentioned motherboard and components. The second graphics subsystem **40'** may be added to a single housing that houses the remainder of the computing device, or may form part of a docking station that only forms part of device **10'**, when device **10'** is physically interconnected thereto.

Device **10'** may be operated in at least two power consumption modes: a higher power consumption mode and a lower power consumption mode. In the depicted embodiments, device **10'** the higher power mode may be assumed when device **10'** is powered by a power source connected to an AC(mains) supply; the lower power consumption mode may be assumed when device **10'** is powered by a DC power source using one or more batteries, fuel cells, or the like. Alternatively, power consumption modes may be user selected, software controlled, based on for example, user preferences, types of software applications being executed, battery levels, and the like, or otherwise chosen.

The organization of software controlling operation of device **10'** is disclosed in U.S. Patent Application No. 11/421,005, and shares similarity to software **100**, described above.

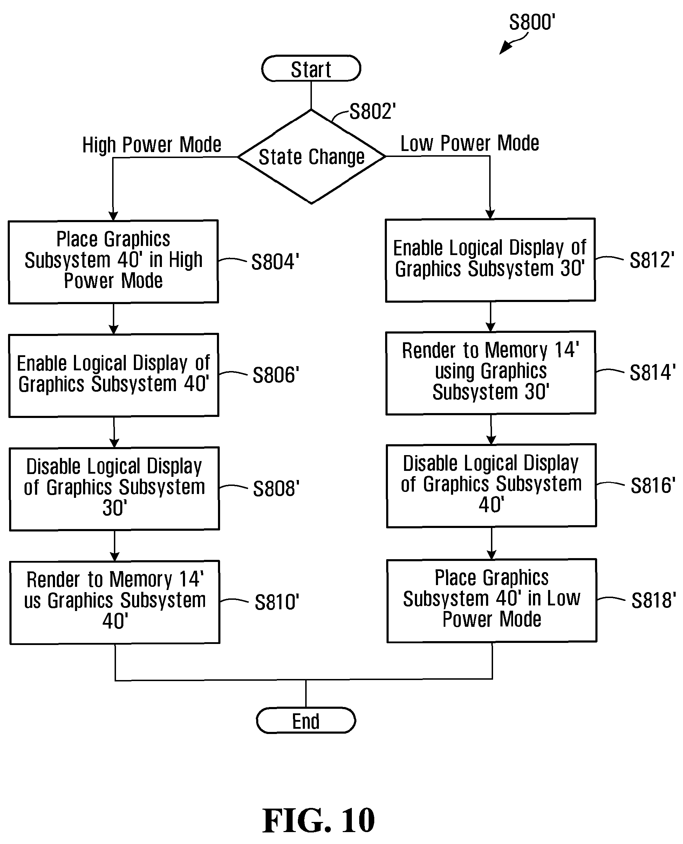

Portions of the software controlling operation of device **10'** as device **10'** transitions between high and low power consumption states. Specifically **FIG. 10** depicts software blocks **S800'**, that may be performed by a central processor (like processor **12 -** **FIG. 1**) under control of software within system memory of device **10'**. Blocks **S800'** may be performed each time device **10'** undergoes a state change, for which subsystems **30'** and **40'** should be configured accordingly. As illustrated, in block **S802'** the software determines whether device 10' should assume its higher power consumption mode, or its lower power consumption mode.

When device **10'** is to resume (or transition) to its high power consumption mode, blocks **S804'-S810'** are executed. In block **S804** graphics subsystem **40'** is placed in its full operational (high power consumption) mode, if it is not already in this mode. This may be performed by providing an appropriate signal to power controller **60'**, through the driver controlling graphics subsystem **40'**. Next, graphics subsystem **40'** is enabled in blocks **S806** and **S808**. Again, this may be performed by logically disabling any display interconnected associated with graphics subsystem **30'** in block **S804**, and logically enabling the display connected with graphics subsystem **40'**, in block **S808**. Blocks **S806** and **S808** may again be performed, by appropriate operating system API calls, such as the EnumDisplayDevices() and ChangeDisplaySettingsEX() calls described in the 11/421,005 patent application, or through direct communication with hardware.

Notably, no physical display is connected to graphics subsystem **40'**. Driver software controlling operation of graphics subsystem **40'** is configured to render images in buffer **14'** of graphics subsystem **30'** instead of within associated memory **50'** in step **S810'**. Conveniently, in the presence of high speed bus **22'** (embodied, for example, as the PCle bus), such rendering is possible across bus **22'**, owing in part to transfer speeds enabled by the bus.

The rendering may be direct into the frame buffer across the bus, primitive by primitive, thus transferring the rendered image across bus **22'**. This may be facilitated by allocating buffer **14'** in memory accessible by subsystem **40'** and providing the driver software for subsystem **40'** with the address of buffer **14'**. Alternatively, as will become apparent, the frames may be rendered in one buffer, and transferred by direct memory access or the like across bus **22'**.

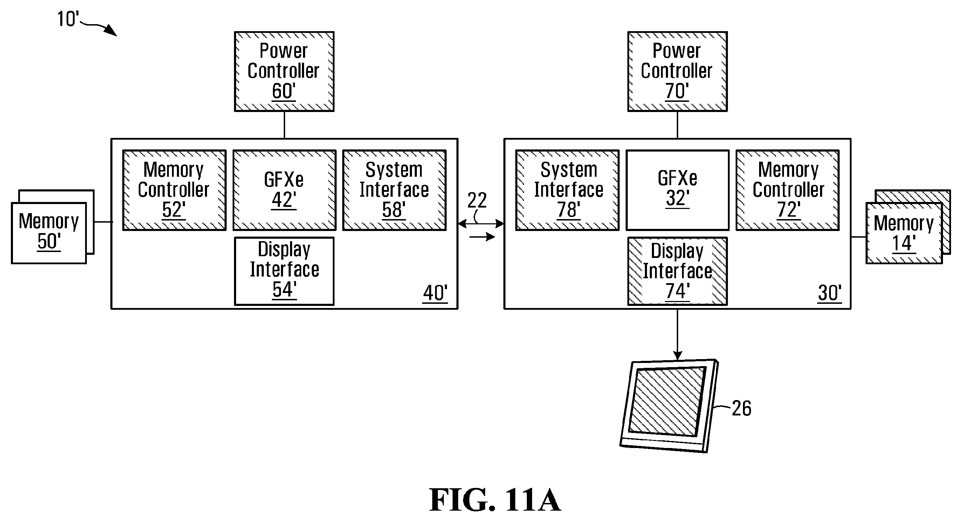

As well, the driver for graphics subsystem **30'** is further configured to cause display interface **74'** of graphics subsystem **30'** to sample the frame buffer in memory **14'**, so as to present the image rendered by graphics subsystem **40'** in the frame buffer in memory **14'** at interconnected display **26'**. At the same time, the driver for graphics subsystem **30'** may direct graphics engine **32'** of graphics subsystem **30'** to remain substantially dormant or idle. This mode of operation is schematically depicted in **FIG. 11A** with only the active blocks of graphics subsystem **40'** and graphics subsystem **30'**, crosshatched.

As will be apparent, in the embodiment of **FIG. 11A** memory **50'** and display interface **54'** are not used. As such, these functional blocks could be eliminated from subsystem **40'** allowing cost reduction. The resulting subsystem **40'** need not include a display interface and would lack memory defining a frame buffer local to subsystem **40'**. Producing such a graphics subsystem may be beneficial, as subsystem **40'** could be produced to complement the functionality provided by subsystem **30'**. For example, subsystem could provide a graphics engine **42'** that provides **3**D graphics or video decoding capabilities. Graphics engine **32'** may not include these capabilities. At the same time, **2**D graphics abilities offered by graphics engine **32'** need not be included in subsystem **40'**. Consumers, in turn could add graphics subsystem **30'** only when additional functionality is needed.

When device **10'** is to transition to, or resume its low power consumption mode, blocks **S812' - S818'** are executed. Broadly speaking, graphics subsystem **40'** is partially or completely disabled and placed in its low power consumption mode, and rendering is again performed by graphics subsystem **30'**. To do so, any display interconnected associated with graphics subsystem **30'** may be enabled in block **S812'**, and any display physically connected with graphics subsystem **40'** may be logically disabled in block **S814'**. Next, driver software controlling operation of graphics subsystem **30'** is again configured to cause graphics subsystem **30'** to render images in memory **14'**. Display interface **74'** continues to sample memory **14'** to present images on display **26'** interconnected with port **78'**. As well, processor **12'** first provides a suitable signal to power controller **60'** in block **S818'**, placing graphics subsystem **40'** in its low power state. In its simplest form, a power controller (not shown) disconnects power to graphics subsystem **40'** or places graphics subsystem **40'** into a lower power sleep mode. Again, in this lower power consumption mode, voltages are throttled, and/or all or parts of graphics subsystem **40'** are powered down and/or selected clocks used by graphics subsystem **40'** are slowed. Specifically, the graphics engine **42'** of graphics subsystem **40'** remains idle or substantially idle (e.g. it may be slowed, disable or powered down). This mode of operation is schematically depicted in **FIG. 9B** with only the active functional blocks of adapter **40'** and graphics subsystem **30'**, crosshatched. The inactive/idle functional blocks may be entirely disabled, or operated at reduced voltages or clock speeds.

Optionally, portions of graphics subsystem **30'** could be disabled when graphics engine **32'** is not in use. This could be facilitated by placing graphics engine **32'** and other components on one or more voltage islands that may be disabled by way of a GPIO or similar circuit, any time graphics subsystem **40'** is responsible for rendering images.

Other variations should also be apparent. According to the invention in high power modes depicted in **FIGS. 11A**, both graphics subsystem **30'** and graphics subsystem **40'** could render to memory **14'** or memory **50'**. In this way, the two graphics subsystems **30'** and **40'** may operate in concert, each rendering an alternate frame in memory **14'** or rendering an alternate portion (e.g. scan-line) of each frame in memory **14'**.

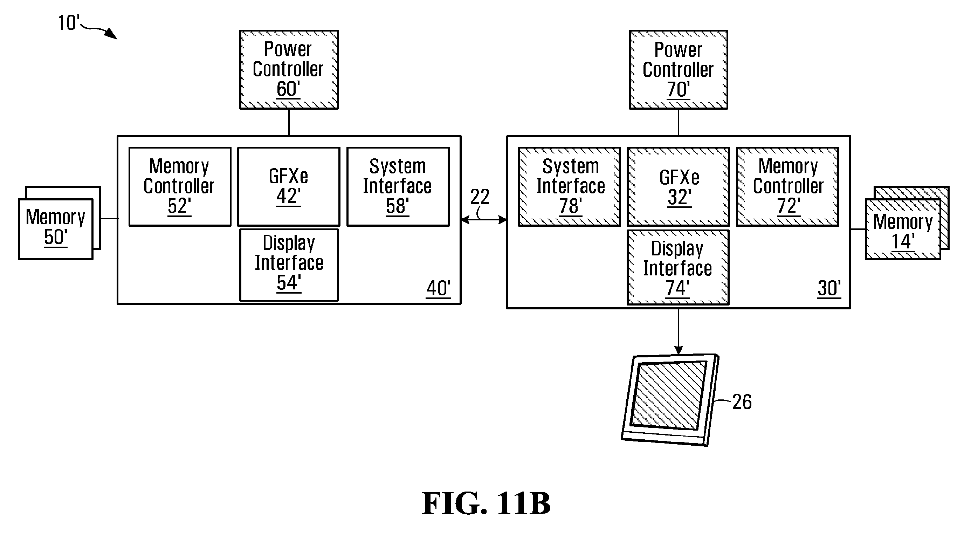

In yet other embodiments, additional displays may be connected to graphics subsystems **30'** and **40'** allowing concurrent use of multiple displays in the high power consumption modes, as detailed above. In this way, display interface **54'** could be used to drive a second display. Upon transition to a lower power consumption mode, device **10'** could be configured to operate as depicted in **FIG. 11B****.**

Similarly, device **10'** (or **10**) could include multiple additional graphics subsystems connected to bus **22'** (or **22**), all of which could be active in the high power consumption mode, and render graphics through display interface **74'** of graphics subsystem **30'**. Upon transition to the lower power consumption mode, these could be disabled and rendering could be left to graphics engine **32'** of graphics subsystem **30'**.

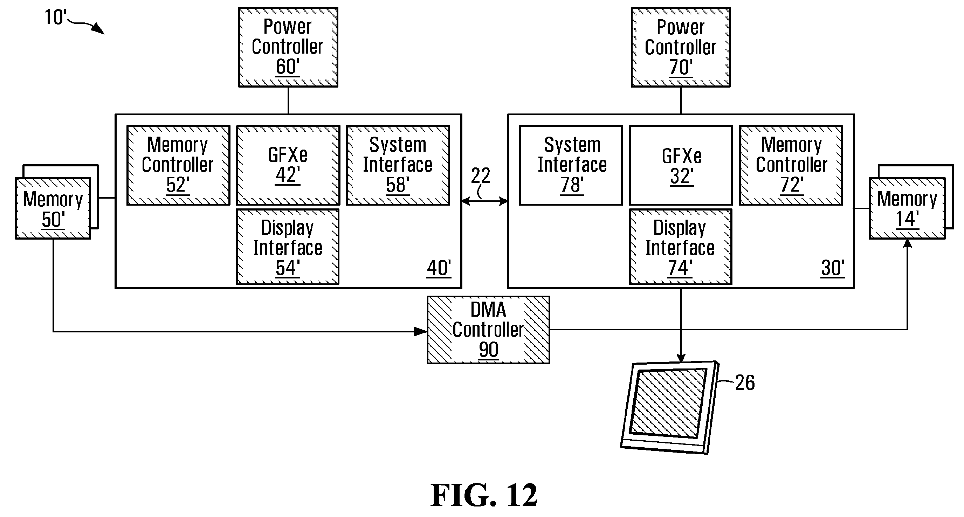

In yet another embodiment depicted in **FIG. 12**, computing device **10'** may include a direct memory access (DMA) controller **90**. DMA controller **90** may transfer data from memory **50'** to memory **14'**. In this way, in a higher power consumption mode of device **10'**, graphics subsystem **40'** could render images to memory **50'**. These rendered images could then be transferred by DMA controller **90** to a frame buffer in memory **14'**. DMA controller **90'** could form part of graphics subsystem **30'** or **40'** (for example as DMA engines of graphics engines **32'** or **42'**), or be otherwise located in computing device **10'**. Data may be transferred across bus **20'** or otherwise directly from memory **50'** to memory **14'**. Display interface **74'** would continue operating as disclosed above, sampling the frame buffer in memory **14'** to present the rendered image on display **26'**. Again, active blocks of device **10'** of **FIG. 10**, in its higher power consumption mode are illustrated in crosshatch in **FIG. 12**.

Of course, the above described embodiments are intended to be illustrative only and in no way limiting. The described embodiments of carrying out the invention are susceptible to many modifications of form, arrangement of parts, details and order of operation.

## Claims

1. A method of operating a computing device (10'), said computing device (10') comprising a memory (14'), a first graphics subsystem (30') comprising a first graphics processor (32'), and a display interface (74') for presenting video frames on a display **characterized in that**:
said first graphics processor (32') and said memory (14') are interconnected by an interface circuit (72'), said computing device further comprising a second graphics subsystem (40') comprising a second graphics processor (42');
said second graphics subsystem lacks frame buffer memory and a display interface;
a high speed bus connection (22) being terminated by said second graphics subsystem (40') so that all data provided to or from said second graphics subsystem is provided by way of said high speed bus connnection (22), said method comprising:
establishing a frame buffer in said memory (14') interconnected with said display interface;
providing instructions to said second graphics processor (42') by way of said high speed bus connection (22), to render video frames into said frame buffer, primitive by primitive, by way of said high speed bus connection (22), wherein all frames to be presented on said display are rendered by said second graphics processor (42'); and
wherein said frames from said frame buffer are presented on a display by way of said display interface.

2. The method of claim 1, wherein said display interface forms part of a peripheral expansion interface.

3. The method of claim 2, wherein said second graphics subsystem (40') is formed on a peripheral expansion card (50) interconnected with said high speed bus connection (22).

4. The method of claim 1, wherein said computing device (10') is a portable computing device, and said second graphics subsystem (40') forms part of a docking station.

5. Computer readable medium, storing computing executable instructions that adapt said computing device (10') to perform the method of claim 1.

6. A graphics subsystem (40') for connection to a host computing device, the host computing device comprising a graphics memory (14') defining a frame buffer, a high speed bus (22) and a display interface (74') interconnected with graphics memory (14') for presenting video frames on a display (26), said graphics subsystem comprising:
a graphics processor (42'), and a peripheral interconnect bus interface (58'), for interconnecting said graphics subsystem to said high speed bus (22) of said host computing device (10') so that all data provided to or from said graphics subsystem is sent by way of said high speed bus, **characterized in that**:
said graphics subsystem (40') lacks memory defining a frame buffer local to said graphics subsystem; and
said graphics subsystem (40') is operable to receive rendering instructions and to render video frames directly into said frame buffer of the host computing device primitive by primitive by way of said high speed bus (22);
wherein said graphics processor is arranged to render all video frames to be presented on said display and wherein all graphics commands are received from said host computing device over said peripheral interconnect bus interface.

7. The graphics subsystem of claim 6, wherein said graphics subsytem (40') forms part of a docking station, and said host processor forms part of a portable computing device, which is connectable with said docking station.

8. A computing device (10') comprising the graphics subsystem of claim 6 and said host computing device, the host computing device further comprising a first graphics processor (32'), which graphics processor (32') is arranged to be in communication with said graphics memory (14') and which graphics processor (32') is interconnected with said high speed bus (22) **characterised by** computer executable instructions stored in said memory (14'), adapting said computing device (10') to:
establish said frame buffer in said memory (14');
provide said graphics subsystem (40') with the address of said frame buffer;
cause said graphics subsystem (40') to render video frames directly into said frame buffer primitive by primitive by way of said high speed bus (22);
present said rendered frames from said frame buffer on a display by way of said display interface.

9. The computing device of claim 8, wherein said display interface (74') forms part of a peripheral expansion interface.

10. The computing device of claim 9, wherein said graphics subsystem (40') forms part of a peripheral expansion card (50), in a peripheral expansion slot (18) in communication with said peripheral interconnect bus (22).

11. The computing device of claim 8, wherein said host computing device (30') is a portable computing device, and said graphics subsystem (40') forms part of a docking station, which is connected with the host computing device

12. The computing device of claim 8, wherein said display interface forms part of a graphics adapter (34) on a peripheral expansion interface (14) interconnecting said first graphics processor (32') to said peripheral interconnect bus (22).

## Patentansprüche

1. Verfahren zum Betreiben einer Rechenvorrichtung (10'), wobei die Rechenvorrichtung (10') einen Speicher (14'), ein erstes Grafiksubsystem (30'), das einen ersten Grafikprozessor (32') umfasst, und eine Anzeigeschnittstelle (74') umfasst, um Video-Frames auf einer Anzeige zu präsentieren, **dadurch gekennzeichnet, dass**:
der erste Grafikprozessor (32') und der Speicher (14') durch eine Schnittstellenschaltung (72') zusammengeschaltet sind, wobei die Rechenvorrichtung ferner ein zweites Grafiksubsystem (40') umfasst, das einen zweiten Grafikprozessor (42') umfasst;
dem zweiten Grafiksubsystem ein Frame-Pufferspeicher und eine Anzeigeschnittstelle fehlen;
eine Hochgeschwindigkeitsdatenbusverbindung (22) von dem zweiten Grafiksubsystem (40') terminiert wird, derart, dass alle Daten, die an das oder von dem zweiten Grafiksubsystem bereitgestellt werden, über die Hochgeschwindigkeitsdatenbusverbindung (22) bereitgestellt werden, wobei das Verfahren Folgendes umfasst:
Erstellen eines Frame-Puffers in dem Speicher (14'), der mit der Anzeigeschnittstelle zusammengeschaltet ist;
Bereitstellen von Anweisungen an den zweiten Grafikprozessor (42') über die Hochgeschwindigkeitsdatenbusverbindung (22), um Video-Frames Primitive für Primitive mittels der Hochgeschwindigkeitsdatenbusverbindung (22) in den Frame-Puffer wiederzugeben, wobei alle Frames, die auf der Anzeige präsentiert werden sollen, von dem zweiten Grafikprozessor (42') wiedergegeben werden; und
wobei die Frames von dem Frame-Puffer über die Anzeigeschnittstelle auf einer Anzeige präsentiert werden.

2. Verfahren nach Anspruch 1, wobei die Anzeigeschnittstelle Teil einer Peripherieerweiterungsschnittstelle bildet.

3. Verfahren nach Anspruch 2, wobei das zweite Grafiksubsystem (40') auf einer Peripherieerweiterungskarte (50) gebildet wird, die mit der Hochgeschwindigkeitsdatenbusverbindung (22) zusammengeschaltet ist.

4. Verfahren nach Anspruch 1, wobei die Rechenvorrichtung (10') eine tragbare Rechenvorrichtung ist und das zweite Grafiksubsystem (40') Teil einer Dockingstation bildet.

5. Computerlesbares Medium, das von einem Computer ausführbare Anweisungen speichert, die die Rechenvorrichtung (10') dazu anpassen, das Verfahren nach Anspruch 1 durchzuführen.

6. Grafiksubsystem (40') zum Verbinden mit einer Host-Rechenvorrichtung, wobei die Host-Rechenvorrichtung einen Grafikspeicher (14') umfasst, der einen Frame-Puffer, einen Hochgeschwindigkeitsdatenbus (22) und eine Anzeigeschnittstelle (74') definiert, die mit dem Grafikspeicher (14') zusammengeschaltet sind, um Video-Frames auf einer Anzeige (26) zu präsentieren, wobei das Grafiksubsystem Folgendes umfasst:
einen Grafikprozessor (42') und eine Peripheriezusammenschaltungsdatenbusschnittstelle (58') zum Zusammenschalten des Grafiksubsystems mit dem Hochgeschwindigkeitsdatenbus (22) der Host-Rechenvorrichtung (10'), so dass alle Daten, die an das oder von dem Grafiksubsystem bereitgestellt werden, über den Hochgeschwindigkeitsdatenbus gesendet werden, **dadurch gekennzeichnet, dass**:
dem Grafiksubsystem (40') Speicher fehlt, der einen Frame-Puffer definiert, der für das Grafiksubsystem lokal ist; und
das Grafiksubsystem (40') betriebsfähig ist, Wiedergabeanweisungen zu empfangen und Video-Frames über den Hochgeschwindigkeitsdatenbus (22) direkt Primitive für Primitive in den Frame-Puffer der Host-Rechenvorrichtung wiederzugeben;
wobei der Grafikprozessor dazu angeordnet ist, alle Video-Frames wiederzugeben, die auf der Anzeige präsentiert werden sollen, und wobei alle Grafikbefehle von der Host-Rechenvorrichtung über die Peripheriezusammenschaltungsdatenbusschnittstelle empfangen werden.

7. Grafiksubsystem nach Anspruch 6, wobei das Grafiksubsystem (40') einen Teil einer Dockingstation bildet und der Host-Prozessor einen Teil einer tragbaren Rechenvorrichtung bildet, die mit der Dockingstation verbunden werden kann.

8. Rechenvorrichtung (10'), umfassend das Grafiksubsystem nach Anspruch 6 und die Host-Rechenvorrichtung, wobei die Host-Rechenvorrichtung einen ersten Grafikprozessor (32') umfasst, wobei der Grafikprozessor (32') dazu angeordnet ist, mit dem Grafikspeicher (14') zu kommunizieren, wobei der Grafikprozessor (32') mit dem Hochgeschwindigkeitsdatenbus (22) zusammengeschaltet ist, **gekennzeichnet durch** von einem Computer ausführbare Anweisungen, die in dem Speicher (14') gespeichert sind und die Rechenvorrichtung (10') zu Folgendem anpassen:
Erstellen des Frame-Puffers in dem Speicher (14');
Bereitstellen der Adresse des Frame-Puffers an das Grafiksubsystem (40');
Veranlassen des Grafiksubsystems (40'), Video-Frames direkt Primitive für Primitive über den Hochgeschwindigkeitsdatenbus (22) wiederzugeben;
Präsentieren der wiedergegebenen Frames aus dem Frame-Puffer auf einer Anzeige über die Anzeigeschnittstelle.

9. Rechenvorrichtung nach Anspruch 8, wobei die Anzeigeschnittstelle (74') einen Teil einer Peripherieerweiterungsschnittstelle bildet.

10. Rechenvorrichtung nach Anspruch 9, wobei das Grafiksubsystem (40') einen Teil einer Peripherieerweiterungskarte (50) in einem Peripherieerweiterungsschlitz (18) bildet, der mit dem Peripheriezusammenschaltungsdatenbus (22) kommuniziert.

11. Rechenvorrichtung nach Anspruch 8, wobei die Host-Rechenvorrichtung (30') eine tragbare Rechenvorrichtung ist und das Grafiksubsystem (40') einen Teil einer Dockingstation bildet, die mit der Host-Rechenvorrichtung verbunden ist.

12. Rechenvorrichtung nach Anspruch 8, wobei die Anzeigeschnittstelle einen Teil eines Grafikadapters (34) an einer Peripherieerweiterungsschnittstelle (14) bildet, die den ersten Grafikprozessor (32') mit dem Peripheriezusammenschaltungsdatenbus (22) zusammenschaltet.

## Revendications

1. Procédé d'exploitation d'un dispositif informatique (10'), ledit dispositif informatique (10') comprenant une mémoire (14'), un premier sous-système graphique (30') comprenant un premier processeur graphique (32'), et une interface d'affichage (74') destinée à présenter des trames vidéo sur un afficheur, **caractérisé en ce que** :
ledit premier processeur graphique (32') et ladite mémoire (14') sont interconnectés par un circuit d'interface (72'), ledit dispositif informatique comprenant en outre un second sous-système graphique (40') comprenant un second processeur graphique (42') ;
ledit second sous-système graphique ne comprend pas de mémoire tampon de trame et d'interface d'affichage ;
une connexion de bus haute vitesse (22) étant terminée par ledit second sous-système graphique (40') de sorte que toutes les données fournies audit ou provenant dudit second sous-système graphique soient fournies au moyen de ladite connexion de bus haute vitesse (22), ledit procédé comprenant :
l'établissement d'un tampon de trame dans ladite mémoire (14') interconnecté à ladite interface d'affichage ;
la fourniture d'instructions audit second processeur graphique (42') au moyen de ladite connexion de bus haute vitesse (22), pour rendre des trames vidéo dans ledit tampon de trame, primitive par primitive, au moyen de ladite connexion de bus haute vitesse (22), dans lequel toutes les trames à présenter sur ledit afficheur sont rendues par ledit second processeur graphique (42') ; et
dans lequel lesdites trames en provenance dudit tampon de trame sont présentées sur un afficheur au moyen de ladite interface d'affichage.

2. Procédé selon la revendication 1, dans lequel ladite interface d'affichage fait partie d'une interface d'extension périphérique.

3. Procédé selon la revendication 2, dans lequel ledit second sous-système graphique (40') est formé sur une carte d'extension périphérique (50) interconnectée à ladite connexion de bus haute vitesse (22).

4. Procédé selon la revendication 1, dans lequel ledit dispositif informatique (10') est un dispositif informatique portable, et ledit second sous-système graphique (40') fait partie d'une station d'accueil.

5. Support lisible par ordinateur, stockant des instructions exécutables par ordinateur qui adaptent ledit dispositif informatique (10') pour réaliser le procédé selon la revendication 1.

6. Sous-système graphique (40') destiné à la connexion à un dispositif informatique hôte, le dispositif informatique hôte comprenant une mémoire graphique (14') définissant un tampon de trame, un bus haute vitesse (22) et une interface d'affichage (74') interconnectés à la mémoire graphique (14') pour présenter des trames vidéo sur un afficheur (26), ledit sous-système graphique comprenant :
un processeur graphique (42'), et une interface de bus d'interconnexion périphérique (58'), pour interconnecter ledit sous-système graphique audit bus haute vitesse (22) dudit dispositif informatique hôte (10') de sorte que toutes les données fournies audit ou provenant dudit sous-système graphique soient envoyées au moyen dudit bus haute vitesse, **caractérisé en ce que** :
ledit sous-système graphique (40') ne comprend pas de mémoire définissant un tampon de trame local par rapport audit sous-système graphique ; et
ledit sous-système graphique (40') est fonctionnel pour recevoir des instructions de rendu et pour rendre des trames vidéo directement dans ledit tampon de trame du dispositif informatique hôte, primitive par primitive, au moyen dudit bus haute vitesse (22) ;
dans lequel ledit processeur graphique est agencé pour rendre toutes les trames vidéo à présenter sur ledit afficheur et dans lequel toutes les commandes graphiques sont reçues dudit dispositif informatique hôte sur ladite interface de bus d'interconnexion périphérique.

7. Sous-système graphique selon la revendication 6, dans lequel ledit sous-système graphique (40') fait partie d'une station d'accueil, et ledit processeur hôte fait partie d'un dispositif informatique portable, qui peut être connecté à ladite station d'accueil.

8. Dispositif informatique (10') comprenant le sous-système graphique de la revendication 6 et ledit dispositif informatique hôte, le dispositif informatique hôte comprenant en outre un premier processeur graphique (32'), lequel processeur graphique (32') est agencé pour être en communication avec ladite mémoire graphique (14') et lequel processeur graphique (32') est interconnecté audit bus haute vitesse (22),
**caractérisé en ce que** des instructions exécutables par ordinateur stockées dans ladite mémoire (14'), adaptent ledit dispositif informatique (10') pour :
établir ledit tampon de trame dans ladite mémoire (14') ;
fournir audit sous-système graphique (40') l'adresse dudit tampon de trame ;
amener ledit sous-système graphique (40') à rendre des trames vidéo directement dans ledit tampon de trame, primitive par primitive, au moyen dudit bus haute vitesse (22) ;
présenter lesdites trames rendues à partir dudit tampon de trame sur un afficheur au moyen de ladite interface d'affichage.

9. Dispositif informatique selon la revendication 8, dans lequel ladite interface d'affichage (74') fait partie d'une interface d'extension périphérique.

10. Dispositif informatique selon la revendication 9, dans lequel ledit sous-système graphique (40') fait partie d'une carte d'extension périphérique (50), dans une fente d'extension périphérique (18) en communication avec ledit bus d'interconnexion périphérique (22).

11. Dispositif informatique selon la revendication 8, dans lequel ledit dispositif informatique hôte (30') est un dispositif informatique portable, et ledit sous-système graphique (40') fait partie d'une station d'accueil, qui est connectée au dispositif informatique hôte.

12. Dispositif informatique selon la revendication 8, dans lequel ladite interface d'affichage fait partie d'un adaptateur graphique (34) sur une interface d'extension périphérique (14) interconnectant ledit premier processeur graphique (32') audit bus d'interconnexion périphérique (22).
